# EUROPÄISCHE PATENTSCHRIFT

(11) **EP 1 798 486 B1**
(45) Veröffentlichungstag und Bekanntmachung des Hinweises auf die Patenterteilung: **29.08.2012**
(21) Anmeldenummer: 06025504.9
(22) Anmeldetag: 09.12.2006
(51) Int. Cl.: F24D 11/00, F28D 20/02, F24D 12/02

(54) **Heiz- oder Brauchwasserwärmespeicher mit mindestens zwei Wärmequellen**
Heating- or sanitary hot water accumulator having at least two heat sources
Accumulateur de chaleur d'eau chaude de chauffage ou sanitaire avec au moins deux sources de chaleur.

(30) Priorität: 15.12.2005 AT 20032005; 14.01.2006 DE 102006001906
(43) Veröffentlichungstag der Anmeldung: 20.06.2007
(73) Patentinhaber: Vaillant GmbH, 42859 Remscheid (DE)
(72) Erfinder: Langer, Jens, 42349 Wuppertal (DE)
(74) Vertreter: Hocker, Thomas

(56) Entgegenhaltungen:
- EP-A- 0 017 975
- WO-A-98/40684
- DE-U1- 9 418 656
- GB-A- 2 039 027
- JP-A- 57 087 593

## Beschreibung

Die Erfindung bezieht sich auf eine Heizung mit einem Heiz- oder Brauchwasserwärmespeicher mit mindestens zwei Wärmequellen.

Aus dem Stand der Technik sind einteilige, wassergefüllte Heiz- oder Brauchwasserwärmespeicher bekannt, bei denen der untere Teil von einer Umweltwärmequelle, zum Beispiel einem Solarabsorber, beheizt wird und der obere Teil von einem konventionellen Heizgerät beheizt wird. Wird im Sommer viel Solarwärme in den unteren Teil eingebracht, so reicht dies zumeist zur Beheizung des Speichers aus. Im Winter und in der Übergangszeit hingegen, wenn wenig Solarwärme aufgenommen werden kann, wird der untere Teil des Speichers lediglich von der Umweltwärmequelle vorgewärmt, während das konventionelle Heizgerät den oberen Teil auf Solltemperatur heizt.

Bei Warmwasserspeichern besteht das Problem, dass auf der einen Seite die Temperatur eine bestimmte Temperatur nicht übersteigen soll, um die Abstrahlverluste zu limitieren. Um Wärme auf einem bestimmten Niveau entnehmen zu können, ist eine bestimmte Mindesttemperatur in einem Teilbereich notwendig. Andererseits muss die Temperatur zumindest temporär oberhalb 55°C gehalten werden, um Legionellenbildung zu vermeiden. Hieraus resultiert ein relativ kleiner Temperaturbereich, in dem sich die Speichertemperatur aufhalten darf. Somit ist ein relativ großer Speicherbehälter notwendig, um viel Wärme aufnehmen zu können. Ein großes Volumen verfügt über eine große Oberfläche, so dass nennenswerte Verluste an die Umgebung auftreten.

Aus DE 94 18 656 U1 ist ein Wärmespeicher bekannt, welcher im mittleren Speicherteil Latentspeicherelemente, die von einer Wärmeübertragungsflüssigkeit (z.B. Wasser) umgeben sind, enthält. Im Wärmespelcher erfolgt die Fluidströmung des gespeicherten Wassers ausschließlich durch freie Konvektion. Im unteren Teil eingebrachte Wärme steigt nach oben und erwärmt die Latentspeicherelemente. Wird im oberen Bereich Wärme entnommen, so strömt das abgekühlte Wasser nach unten an den Latentspeicherelementen vorbei und führt zu einer Kühlung dieser Latentspeicherelemente.

Aus CH 648 412 A5 ist ein Speicher bekannt, in welchem oberhalb eines Dispergierelements ein Latentspeichermedium zur Wärmespeicherung auf nahezu konstantem Niveau angeordnet ist; darüber befindet sich Paraffinöl. Das Paraffinöl kann über eine Pumpe nach unten gepumpt werden, um einen Wärmeausgleich zwischen oben und unten zu ermöglichen.

Die DE 299 14 113 U1 zeigt einen dreiteiligen Speicher, wobei jedes Speicherteil Latentspeichermaterial enthält. Die Wärme eines Solarkollektors wird je nach Temperaturniveau in unterschiedliche Speicherteile eingeleitet.

Die WO 99/43988 offenbart einen Wärmespeicher, bei dem zwischen einem Niedertemperatur-Latentwärmespeicher und einem Hochtemperatur-Latentwärmespeicher ein Wasserspeicher zwischengeschaltet ist. Ein Solarkollektor erhitzt sowohl den Wasserspeicher, als auch den Niedertemperatur-Latentwärmespeicher. Das Abgasrohr eines Heizkessels überträgt Wärme auf alle drei Speicherteile.

DE 298 21 270 U1 zeigt einen Wärmespeicher, bei dem ein Latentspeichervolumen von einem Wasservolumen umgeben ist. Optional ist vorgesehen, dass das Paraffin des Latentspeichervolumens von Wasser durchströmt wird. Als Wärmequelle dient eine Heizungsanlage mit Wasserzulauf und Wasserablauf. Der Brauchwasserspeicher wird indirekt über die Vorrichtung mit Latentspeichervolumen erhitzt.

Aus EP 017 975 A ist ein Heizsystem mit mehreren Latentwärmespeichem und einem Solarabsorber als Wärmequelle bekannt. Auch aus DE 94 18 656 U1 ist eine derartige Kombination bekannt. Der dort beschriebene Wärmespeicher enthält drei Zonen; in der mittleren Zone befinden sich Latentspeicherelemente, die von einer Wärmeübertragungsflüasigkeit umgeben sind. Die Fluidströmung erfolgt ausschließlich durch freie Konvektion. Im unteren Teil eingebrachte Wärme steigt nach oben und erwärmt die Latentspeicherelemente. Wird im oberen Bereich Wärme entnommen, so strömt das abgekühlte Wasser nach unten an den Latentspeicherelementen vorbei.

Aufgabe der vorliegenden Erfindung ist es, die Wärmekapazität eines Heiz- oder Brauchwasserwärmespeichers einer Heizung mit mindestens zwei Wärmequellen zu erhöhen und dabei das notwendige Speichervolumen zu reduzieren.

Erfindungsgemäß wird dies durch die Merkmale des Anspruchs 1 gelöst.

Gemäß den Merkmalen des Anspruchs 2 bilden die beiden Speicherteilbereiche eine Baueinheit. Hierbei befindet sich der mit den Latentspeichermaterialien gefüllt Speicherteil oberhalb des anderen, da er zumeist die höhere Temperatur aufweist.

Gemäß den Merkmalen des Anspruchs 3 können alternativ zu Anspruch 2 die beiden Speicherteile baulich getrennt, jedoch thermisch über mindestens eine Wärmeträger führende Leitung verbunden sein.

Gemäß den Merkmalen des Anspruchs 4 handelt es sich bei dem Phasenwechselenergie speichernden Medium um ein paraffinhaltiges Medium. Besonders vorteilhaft ist eine Mischung aus Wasser beziehungsweise Wasserglykol und mikroverkapseltem Paraffin.

Gemäß den Merkmalen des Anspruchs 5 weist der Latentspeicher eine Vorrichtung zum Volumenausgleich auf. Sofern es sich beim dem Phasenwechselenergie speichernde Medium um PCS handelt, kann ein konventionelles Ausdehnungsgefäß mit einem von einer Membran abgetrennten Stickstoffpolster handeln.

Neben Paraffin wären auch andere Medien zur Aufnahme der Phasenumwandlungsenergie geeignet, insbesondere Salzgemische. So können beispielsweise Gemische aus Magnesiumnitrat mit Nitraten oder Alkali- oder Erdalkalimetallen verwendet werden. Auch Salzgemische auf der Basis von Magnesiumnitrat und Lithiumnitrat (Mg (NO₃)₂ 6 H₂O und LiNO₃, z.B. 87-92 % Mg (NO₃)₂ 6 H₂O und 8-13 % LINO₃ Schmelztemperatur 70°C +/- 2 K, Schmelzwärme 54,32 Wh/kg) sind hierzu geeignet.

Paraffin (CₙH₂ₙ₊₂) stellt eine Sammelbezeichnung für gesättigte Kohlenwasserstoffgemische dar, die hauptsächlich aus Erdöl gewonnen werden. Paraffine, die auch als Wachse bezeichnet werden, sind organische Stoffe, die nach der Raffination geruchlos, geschmacklos und ungiftig sind. Es wird zwischen Normalparaffine und Isoparaffine unterschieden. Normalparaffine sind einfache, lang gestreckte Ketten. Isoparaffine haben von einer langen Grundkette verzweigende Äste. Für wärmetechnische Anwendungen kommen überwiegend Normalparaffine zum Einsatz. Die Schmelztemperatur der Paraffine liegt zwischen 30 bis 90°C bei einer Zahl n zwischen 18 und 50. Mit steigender Molekülkettenlänge bzw. steigender Molmasse nimmt die Schmelztemperatur des Materials stetig zu. Paraffine sind gut für thermische Anwendungen geeignet. Der Vorteil der Paraffine liegt in der Nutzung der latenten Wärme während des Phasenwechsels. Ein geringerer Teil wird als sensible Wärme gespeichert. Die spezifische Wärmekapazität von Wärmeparaffin liegt bei etwa 2,1 kJ/(kg-K), die Schmelzenthalpie bei 180 bis 230 kJ/kg. Hierdurch sind Paraffine bestens zur Wärmespeicherung geeignet. Paraffin speichert beim Phasenwechsel etwa soviel Wärme wie die gleiche Menge Wasser bei einer Temperaturdifferenz von 40 K. Demzufolge werden Paraffine vorzugsweise im Bereich ihrer Schmelztemperatur eingesetzt, da sie in diesem Bereich viel Wärme speichern können. Es ist jedoch darauf zu achten, dass beim Phasenübergang fest (Dichte 0,8 bis 0,9 kg/l) zu flüssig (Dichte 0,75 bis 0,85 kg/l) das Volumen um etwa 10 % zunimmt, so dass bei mit Paraffinen gefüllten Wärmespeichern eine Kompensationsvorrichtung vorgesehen sein sollte.

Eine Sonderform stellen PCS (Phase Change Slurries) dar. Hierbei wird Paraffin in kleinen Kügelchen (Durchmesser 1 bis 20 µm) von einer Hülle (Wandstärke deutlich kleiner 200 nm) umschlossen (Mikroverkapselung). Diese Kügelchen werden in Wasser gegeben, wodurch eine Emulsion aus Wasser und Kügelchen mit PCM-Eigenschaften, d.h. einer hohen Energieaufnahmemöglichkeit in einem kleinen Temperaturbereich, entsteht. Durch geeignete Wahl des PCM kann die Schmelztemperatur des PCS individuell in einem Bereich vorzugsweise zwischen 6 und 65°C eingestellt werden.

Ein besonderer Vorteil des PCS gegenüber PCM stellt die Tatsache dar, dass das Paraffin beim PCS durch die Kügelchen weiterhin mobil bleibt. Bei konventionellem Paraffin findet die Erstarrung zunächst an den Wärmeübertragerflächen des kühlenden Mediums statt. Das Paraffin lagert sich am Wärmeübertrager ab und bildet eine Dämmschicht, so dass die weitere Wärmeübertragung deutlich erschert wird. Die Wärmeleitfähigkeit von festem Paraffin liegt bei lediglich 0,18 W/(mK). Demgegenüber erstarrt bei PCS lediglich das Paraffin in den Kügelchen. Die Kügelchen können von der Wärmeübertragerfläche weg transportiert werden und somit die Wärmeübertragung auf das restliche PCS erleichtern.

Gemäß den Merkmalen des abhängigen Anspruchs 6 wird dem Wärmespeicher eine Vorrichtung zur Nacherhitzung nachgeschaltet, um die Temperatur des Wärmespeichers auf einem vergleichsweise niedrigen Temperaturniveau, das zum Beispiel ausreichend zum Duschen ist, halten zu können und mittels Nacherhitzung auf ein höheres Temperaturniveau, das zum Beispiel zum Spülen benötigt wird, zu erhitzen.

Die Verfahrensansprüche schützen eine besonders vorteilhafte Betriebsweise des Wärmespeichers gemäß den Ansprüchen 1 bis 6. Demzufolge wird der PCM oder PCS enthaltende Speicherteil mit einer Temperatur um die Schmelztemperatur betrieben, da er in diesem Bereich viel Wärme bei nahezu konstanter Temperatur aufnehmen, speichern und abgeben kann. Ist die Temperatur des anderen Speicherteils höher als die Temperatur des PCM oder PCS enthaltenden Speicherteils, so wird Wärme vom wärmeren Speicherteil auf das PCM oder PCS übertragen. Gemäß den Merkmalen des abhängigen Anspruchs 8 kann der Wärmeübergang durch Umwälzung der Emulsion verbessert werden.

Die Erfindung wird nun anhand der Zeichnungen detailliert erläutert.

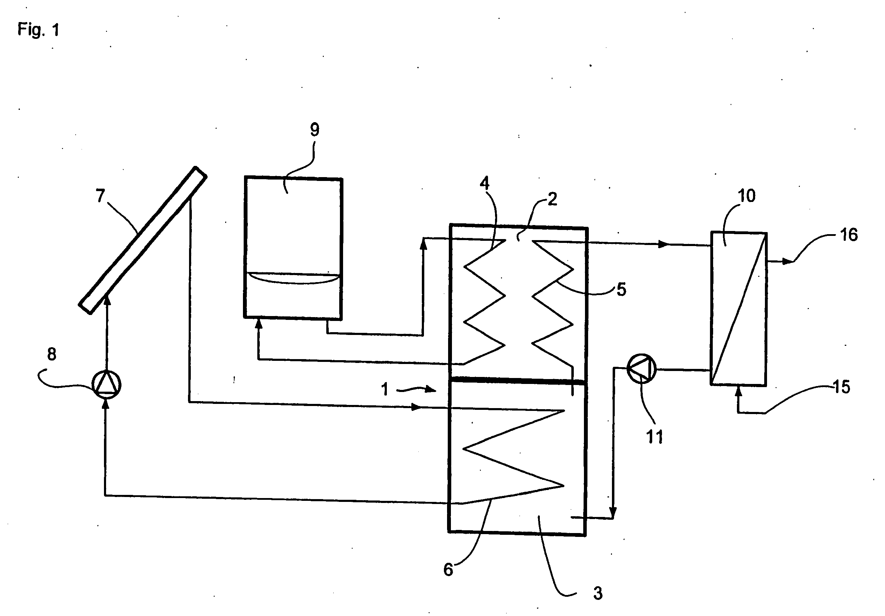

Figur 1 zeigt eine erfindungsgemäße Heizung mit einem Wärmespeicher 1, der aus einem oberen Speicherteil 2 und einem unteren Speicherteil 3 besteht. Im oberen Speicherteil 2 befindet sich eine Emulsion (PCS) aus Wasser und mikroverkapseltem Paraffin. Die Schmelztemperatur des PCS ist auf die Solltemperatur des Speicherteils abgestimmt und kann nicht mehr verändert werden. Dieser Speicherteil 2 ist einerseits über einen Wärmeaustauscher 4 Innerhalb des Speicherteils 2 mit einem konventionellen Heizgerät 9 verbunden. Andererseits befindet sich In diesem Speicherteil 2 ein Wärmeaustauscher 5, der über eine Leitung 14 mit dem anderen Spelchertell 3 und einem Plattenwärmeaustauscher 10 einer nicht detaillierter dargestellten Frischwasserstation mit Kaltwasserzulauf 15 und Vorlaufleitung 16 verbunden ist. Zwischen dem Plattenwärmeaustauscher 10 und dem unteren Speicherteil 3 befindet sich eine Pumpe 11. Im unteren Speicherteil 3 befindet sich ein Wärmeaustauscher 6, welcher über eine Pumpe 8, welche Sole fördert, mit einem Solarabsorber 7 verbunden ist.

Zwischen den beiden Speicherteilen 2, 3 findet zwar ein Wärmeübergang durch Wärmeleitung statt, der jedoch relativ gering ist.

Beim Betrieb wird der untere Speicherteil 3 durch den Solarabsorber 7 über den Wärmeaustauscher 6 gewärmt. Das Heizgerät 9 erwärmt den oberen Speicherteil 2 über den von oben nach unten durchströmten Wärmeaustauscher 4 auf eine Solltemperatur bis zu 5 Kelvin oberhalb der Schmelztemperatur des PCS, so dass das PCS vollständig geschmolzen ist. Hierbei wird zunächst das PCS im oberen Bereich des oberen Speicherteils 2 geschmolzen; durch die Abkühlung des Wärmeträgers im Wärmeaustauscher 4 findet zunächst im unteren Bereich des oberen Speicherteils 2 noch keine Phasenumwandlung statt. Wird warmes Brauchwasser benötigt, so läuft die Pumpe 11 an und fördert Wasser in den unteren Speicherteil 3. Das zuströmende Wasser verdrängt vorgewärmtes Wasser im unten Speicherteil 3, das in den Wärmeaustauscher 5 im oberen Speichertell 2 strömt, dort Wärme aus dem PCS aufnimmt und erhitzt zum Plattenwärmeaustauscher 10 der Frischwasserstation strömt, wo Wärme auf kaltes, zuströmendes Brauchwasser abgegeben wird. Wird die Schmelztemperatur unterschritten, so gibt das PCS Wärme ab ohne dass die Temperatur im Speicherteil 2 fällt. Erst wenn das gesamte PCS kristallisiert ist, fällt die Temperatur im Speicherteil 2.

Wird im Sommer viel Wärme über den Solarabsorber 7 in den unteren Speicherteil 3 eingebracht, kann gegebenenfalls auf die Beheizung des oberen Speicherteils 2 mittels Heizgerät 9 verzichtet werden. Durch Umwälzen von Wasser vom unteren Speicherteil 3 in den Wärmeaustauscher 5 des oberen Speicherteils 2 kann dann das PCS Wärme aufnehmen. Ist der Wärmeaustauscher 10 der Frischwasserstation nicht auf der Brauchwasserseite durchströmt, so wird dort keine Wärme übertragen.

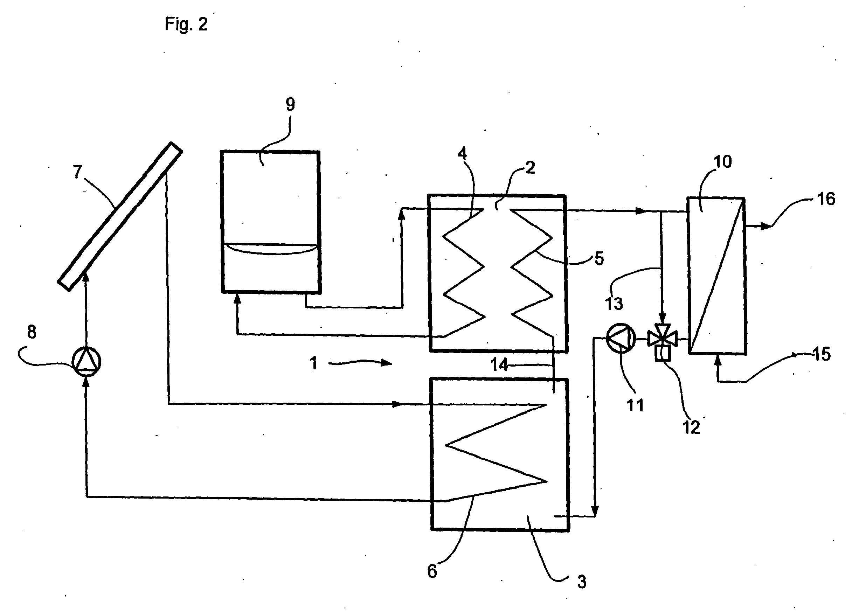

Figur 2 zeigt eine erfindungsgemäßen Heizung mit einem Wärmespeicher 1, der sich vom zuvor beschriebenen Wärmespeicher dadurch unterschiedet, dass zwei baulich getrennte Speicherteilen 2, 3, die über eine Leitung 14 verbunden sind, vorliegen. Das Funktionsprinzip ist ansonsten identisch.

Parallel zum Wärmeaustauscher 10 der Frischwasserstation ist eine Bypassleitung 13 angeordnet, die auf der einen Seite mit einem Dreiwegeventil 12 endet. Zum Transferieren von Wärme vom unteren Speicherteil 3 in den oberen Speicherteil 2 wird das Dreiwegeventil 12 derart geschaltet, dass die Bypassleitung 13 anstelle des Wärmeaustauschers 10 durchströmt wird.

Die Bypassleitung 13 aus dem Ausführungsbeispiel gemäß Figur 2 kann auch in dem Ausführungsbeispiel gemäß Figur 1 eingesetzt werden. Ebenso kann die Bauform gemäß Figur 2 auch ohne Bypassleitung wie die Bauform gemäß Figur 1 betrieben werden.

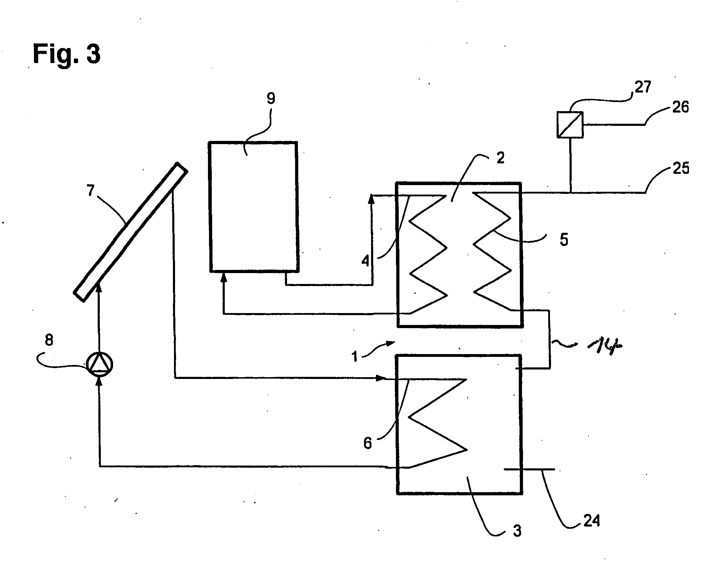

Figur 3 zeigt den Fall, dass der Wärmespeicher 1 nur zur Beheizung auf ein Niveau dient, mit dem Wasser z.B. für Duschen oder Baden bereitgestellt wird. Wasser, das dem unteren Speicherteil 3 über die Kaltwasserleitung 24 zugeführt und über die Leitung 14 in den oberen Speicherteil 2 geleitet wird, kann entweder über die Warmwasserleitung 25 zum Duschen oder Baden verwendet werden oder über den Wärmetauscher 27 zur Heißwasserleitung 26 z.B. zum Spülen geleitet werden. Der Wärmetauscher 27 kann direkt oder indirekt beheizt sein. Hierdurch lassen sich die Bereitschafts- und Verteilverluste durch die niedrige Speichertemperatur verringern. Durch das niedrigere Temperaturniveau können Wärmepumpen und Brennwertgeräte effizienter betrieben werden.

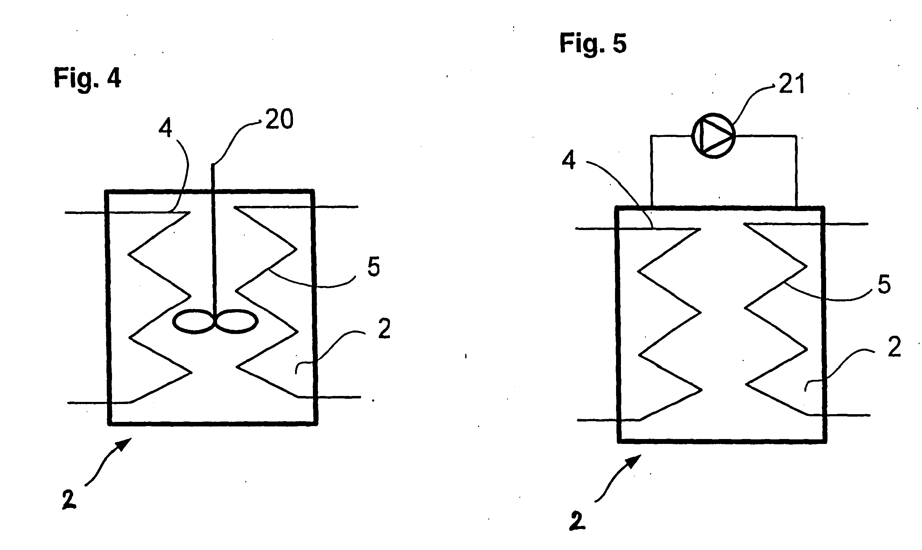

In Figur 4 ist als Ausschnitt aus dem Gesamtsystem ein oberer Speicherteil 2 mit Emulsion dargestellt, bei dem sich ein Rührwerk 20 im Wärmespeicher 2 befindet, um den Speicherinhalt zu homogenisieren und den Wärmeübergang zu verbessern. Letzteres geschieht auch dadurch, dass die Reynoldszahl durch die Erhöhung der Strömungsgeschwindigkeit erhöht wird. Alternativ hierzu wird gemäß Figur 5 die Emulsion mittels Pumpe 21 im oberen Speicherteil 2 umgewälzt.

## Patentansprüche

1. Heizung mit zweigeteiltem Wärmespeicher (1) für Heiz- und / oder Brauchwasser, an den mindestens zwei Wärmequellen (7, 9) sowie ein Wärmeabnehmer (10) angeschlossen sind, wobei ein oberer Speicherteil (2) teilweise oder vollständig mit Latentspeichermaterialien gefüllt ist, dieser obere Speicherteil (2) von einem brennstoffbeheizten oder elektrischen Heizgerät (9) indirekt oder direkt beheizt wird, der andere, untere Speicherteil (3), welcher mit Wasser befüllt ist, von einer Umweltwärmequelle, vorzugsweise einem Solarabsorber (7), beheizt wird, beiben der Wärmeabnehmer (10) mit den beiden Speicherteilen (3, 2) seriell in einem Kreislauf geschaltet ist, wobei das Wasser dieses Kreislaufs den unteren Speicherteil (3) und einen Wärmeaustauscher (5) innerhalb des oberen Speicherteils (2) durchströmt, wodurch zuströmendes Wasser, das in den unteren Speicherteil (3) gefördert wird, vorgewärmtes Wasser im unteren mit Wasser befüllten Speicherteil (3) verdrängt, das wiederum in den Wärmeaustauscher (5) im oberen Speicherteil (2) strömt.

2. Heizung mit Wärmespeicher (1) nach Anspruch 1, **dadurch gekennzeichnet, dass** der Wärmespeicher (1) eine Baueinheit bildet, bei dem der mit Latentspeichermaterialien gefüllte obere Speicherteil (2) oberhalb des anderen, unteren Speicherteils (3) angeordnet ist.

3. Heizung mit Wärmespeicher (1) nach Anspruch 1, **dadurch gekennzeichnet, dass** der Wärmespeicher (1) aus je einer Baueinheit für den mit Latentspeichermaterialien gefüllte obere Speicherteil (2) und einer Baueinheit für den anderen, unteren Speicherteil (3), welche über mindestens eine ein Wärmeträger führende Leitung (14) miteinander verbunden sind, besteht.

4. Heizung mit Wärmespeicher (1) nach einem der Ansprüche 1 bis 3, **dadurch gekennzeichnet, dass** der mit Latentspeichermaterialien gefüllte obere Speicherteil (2) mit einem paraffinhaltigen Medium, bestehend aus einem Fluid aus Wasser oder Wasserglykol mit mikroverkapseltem Paraffin gefüllt ist.

5. Heizung mit Wärmespeicher (1) nach einem der Ansprüche 1 bis 5, **dadurch gekennzeichnet, dass** der mit Latentspeichermaterialien gefüllte obere Speicherteil (2) eine Vorrichtung zum Volumenausgleich, vorzugsweise ein Ausdehnungsgefäß, aufweist.

6. Heizung mit Wärmespeicher (1) nach einem der Ansprüche 1 bis 7, **dadurch gekennzeichnet, dass** dem Wärmespeicher (1) eine Vorrichtung zur Nacherhitzung, vorzugsweise ein direkt oder indirekt beheizter Wärmetauscher (27) nachgeschaltet ist.

7. Verfahren zum Betreiben einer Heizung mit Wärmespeicher (1) nach einem der Ansprüche 1 bis 6, **dadurch gekennzeichnet, dass** das Medium des Wärmeverbrauchers (10) zunächst den nicht mit Latentspeichermaterialien gefüllten, unteren Speicherteil (3) und anschließend den mit Latentspeichermaterialien gefüllte Speicherteil (2) durchströmt.

8. Verfahren zum Betreiben einer Heizung mit Wärmespeicher (1) nach einem der Ansprüche 1 bis 6, **dadurch gekennzeichnet, dass** im Wärmespeicher (1) die Emulsion (2) mittels einer Vorrichtung, vorzugsweise Rührwerk (20) oder Pumpe (21), umgewälzt wird.

9. Verfahren zum Betreiben einer Heizung mit einem Wärmespeicher (1) nach einem der Ansprüche 1 bis 6, **dadurch gekennzeichnet, dass** das Beheizen des mit Latentspeichermaterialien gefüllten oberen Speicherteils (2) bis zur Schmelztemperatur des Latentspeichermaterials oder wenig darüber stattfindet.

10. Verfahren zum Betreiben einer Heizung mit einem Wärmespeicher (1) nach Anspruch 9, **dadurch gekennzeichnet, dass** das thermische Entladen des mit Latentspeichermaterialien gefüllten oberen Speicherteils (2) bis zur Schmelztemperatur des Latentspeichermaterials oder wenig darunter stattfindet und bei Erreichen einer vorbestimmten Temperatur wenige Kelvin unterhalb der Schmelztemperatur des Latentspeichermediums ein Beheizen des Beheizen des mit Latentspeichermaterialien gefüllten oberen Speicherteils (2) stattfindet.

11. Verfahren zum Betreiben einer Heizung mit einem Wärmespeicher (1) nach Anspruch 9 oder 10, **dadurch gekennzeichnet, dass** sofern die Temperatur des nicht mit Latentspelchermaterialien gefüllten unteren Speicherteils (3) größer der Temperatur des mit Latentspeichermaterialien gefüllten oberen Speicherteils (2) ist, Wärme mittels eines die beiden Speicherteile (2, 3) durchströmenden Fluids übertragen wird.

## Claims

1. Heating system, comprising a split heat accumulator (1) for hot water and/or service water, to which at least two heat sources (7, 9) and a heat consumer (10) are connected, wherein an upper accumulator part (2) is filled in part or completely with latent accumulator materials; this upper accumulator part (2) is heated indirectly or directly by a fuel-heated or electric heater (9) and the other, lower accumulator part (3), which is filled with water, is heated by an environmental heat source, preferably a solar absorber (7), the thermal consumer (10) being connected in series in a circuit to the two accumulator parts (3, 2), wherein the water in this circuit flows through the lower accumulator part (3) and through a heat exchanger (5) within the upper accumulator part (2), whereby inflowing water, which is conveyed into the lower accumulator part (3), displaces preheated water in the lower accumulator part (3) filled with water, said preheated water in turn flowing into the heat exchanger (5) in the upper accumulator part (2).

2. Heating system comprising a heat accumulator (1) according to claim 1, **characterised in that** the heat accumulator (1) forms a module in which the upper accumulator part (2) filled with latent accumulator materials is arranged above the other, lower accumulator part (3).

3. Heating system comprising a heat accumulator (1) according to claim 1, **characterised in that** the heat accumulator (1) consists of a module for the upper accumulator part (2) filled with latent accumulator materials and of a module for the other, lower accumulator part (3), which are interconnected via at least one line (14) conveying a thermal transfer medium.

4. Heating system comprising a heat accumulator (1) according to one of claims 1 to 3, **characterised in that** the upper accumulator part (2) filled with latent accumulator materials is filled with a paraffin-containing medium, consisting of a fluid formed of water or water glycol with microencapsulated paraffin.

5. Heating system comprising a heat accumulator (1) according to one of claims 1 to 5, **characterised in that** the upper accumulator part (2) filled with latent accumulator materials comprises a device for volume control, preferably an expansion vessel.

6. Heating system comprising a heat accumulator (1) according to one of claims 1 to 7, **characterised in that** a reheating device, preferably a directly or indirectly heated heat exchanger (27), is arranged downstream of the heat accumulator (1).

7. Method for operating a heating system comprising a heat accumulator (1) according to one of claims 1 to 6, **characterised in that** the medium of the heat consumer (10) first flows through the lower accumulator part (3) not filled with latent accumulator materials, and then flows through the accumulator part (2) filled with latent accumulator materials.

8. Method for operating a heating system comprising a heat accumulator (1) according to one of claims 1 to 6, **characterised in that** the emulsion (2) is circulated in the heat accumulator (1) by means of a device, preferably a stirrer (20) or pump (21).

9. Method for operating a heating system comprising a heat accumulator (1) according to one of claims 1 to 6, **characterised in that** the upper accumulator part (2) filled with latent accumulator materials is heated up to the melting point of the latent accumulator material or just below.

10. Method for operating a heating system comprising a heat accumulator (1) according to claim 9, **characterised in that** the upper accumulator part (2) filled with latent accumulator materials is thermally discharged up to, or just below, the melting point of the latent accumulator material and, once a predetermined temperature a few Kelvin below the melting point of the latent accumulator medium has been reached, the upper accumulator part (2) filled with latent accumulator materials is heated.

11. Method for operating a heating system comprising a heat accumulator (1) according to claim 9 or 10, **characterised in that**, if the temperature of the lower accumulator part (3) not filled with latent accumulator materials is greater than the temperature of the upper accumulator part (2) filled with latent accumulator materials, heat is transferred by means of a fluid flowing through the two accumulator parts (2, 3).

## Revendications

1. Système de chauffage, comprenant un accumulateur de chaleur split (1) pour de l'eau chaude et/ou de l'eau de service, auquel sont connectées au moins deux sources de chaleur (7, 9) et un consommateur de chaleur (10), dans lequel une partie supérieure d'accumulateur (2) est remplie en partie ou complètement avec des matériaux accumulateurs latents ; cette partie supérieure d'accumulateur (2) est chauffée indirectement ou directement par un chauffage au combustible ou électrique (9), et l'autre, partie inférieure d'accumulateur (3), qui est remplie avec de l'eau, est chauffée par une source de chaleur environnementale, de préférence un absorbeur solaire (7), le consommateur thermique (10) étant connecté en série dans un circuit aux deux parties d'accumulateur (3, 2), dans lequel l'eau dans ce circuit s'écoule à travers la partie inférieure d'accumulateur (3) et à travers un échangeur thermique (5) à l'intérieur de la partie supérieure d'accumulateur (2), dans laquelle l'eau arrivant, qui est transportée dans la partie inférieure d'accumulateur (3), déplace l'eau préchauffée dans la partie inférieure d'accumulateur (3) remplie d'eau, ladite eau préchauffée s'écoulant à son tour dans l'échangeur thermique (5) dans la partie supérieure d'accumulateur (2).

2. Système de chauffage comprenant un accumulateur de chaleur (1) selon la revendication 1, **caractérisé en ce que** l'accumulateur de chaleur (1) forme un module, dans lequel la partie supérieure d'accumulateur (2) remplie avec des matériaux accumulateurs latents est disposée au dessus de l'autre, partie inférieure d'accumulateur (3).

3. Système de chauffage comprenant un accumulateur de chaleur (1) selon la revendication 1, **caractérisé en ce que** l'accumulateur de chaleur (1) consiste en un module pour la partie supérieure d'accumulateur (2) remplie avec des matériaux accumulateurs latents et d'un module pour l'autre, partie inférieure d'accumulateur (3), qui sont interconnectés par au moins une conduite (14) transportant un moyen de transfert thermique.

4. Système de chauffage comprenant un accumulateur de chaleur (1) selon l'une des revendications 1 à 3, **caractérisé en ce que** la partie supérieure d'accumulateur (2) remplie de matériaux accumulateurs latents est remplie avec un moyen contenant de la paraffine, consistant en un liquide formé d'eau ou d'eau-glycol avec de la paraffine microencapsulée.

5. Système de chauffage comprenant un accumulateur de chaleur (1) selon l'une des revendications 1 à 5, **caractérisé en ce que** la partie supérieure d'accumulateur (2) remplie de matériaux accumulateurs latents comprend un appareil pour le contrôle du volume, de préférence un vase d'expansion.

6. Système de chauffage comprenant un accumulateur de chaleur (1) selon l'une des revendications 1 à 7, **caractérisé en ce qu'**un appareil pour le réchauffage, de préférence un échangeur thermique chauffé directement ou indirectement (27), est disposé en aval de l'accumulateur de chaleur (1).

7. Méthode de fonctionnement d'un système de chauffage comprenant un accumulateur de chaleur (1) selon l'une des revendications 1 à 6, **caractérisée en ce que** le moyen du consommateur de chaleur (10) s'écoule premièrement à travers la partie inférieure d'accumulateur (3) non remplie avec des matériaux accumulateurs latents, puis s'écoule à travers la partie d'accumulateur (2) remplie avec des matériaux d'accumulateurs latents.

8. Méthode de fonctionnement d'un système de chauffage comprenant un accumulateur de chaleur (1) selon l'une des revendications 1 à 6, **caractérisée en ce que** l'émulsion (2) circule dans l'accumulateur de chaleur (1) au moyen d'un appareil, de préférence un agitateur (20) ou une pompe (21).

9. Méthode de fonctionnement d'un système de chauffage, comprenant un accumulateur de chaleur (1) selon l'une des revendications 1 à 6, **caractérisée en ce que** la partie supérieure d'accumulateur (2) remplie de matériaux accumulateurs latents est chauffée au point de fusion des matériaux accumulateurs latents ou juste en dessous de ce point de fusion.

10. Méthode de fonctionnement d'un système de chauffage, comprenant un accumulateur de chaleur (1) selon la revendication 9, **caractérisée en ce que** la partie supérieure d'accumulateur (2) remplie avec des matériaux accumulateurs latents est déchargée thermiquement jusqu'au point de fusion des matériaux accumulateurs latents ou juste en dessous, et, une fois qu'une température prédéterminée située quelques Kelvin en dessous du point de fusion du moyen accumulateur latent est atteinte, la partie supérieure d'accumulateur (2) remplie avec les matériaux accumulateurs latents est chauffée.

11. Méthode de fonctionnement d'un système de chauffage, comprenant un accumulateur de chaleur (1) selon la revendication 9 ou 10, **caractérisée en ce que** la température de la partie inférieure d'accumulateur (3) non remplie avec des matériaux accumulateurs latents est supérieure à la température de la partie supérieure d'accumulateur (2) remplie avec des matériaux accumulateurs latents, la chaleur est transférée au moyen d'un liquide s'écoulant à travers les deux parties d'accumulateur (2, 3).
